(19) Europäisches Patentamt

European Patent Office

Office européen des brevets

(11) Numéro de publication : **0 325 645 B1**

(12) **FASCICULE DE BREVET EUROPEEN**

(45) Date de publication du fascicule du brevet :
16.10.91 Bulletin 91/42

(51) Int. Cl.⁵ : **G01N 23/222**

(21) Numéro de dépôt : **88907074.4**

(22) Date de dépôt : **14.07.88**

(86) Numéro de dépôt international :
**PCT/EP88/00639**

(87) Numéro de publication internationale :
**WO 89/00685 26.01.89 Gazette 89/03**

(54) PROCEDE ET INSTALLATION D'ANALYSE PAR BOMBARDEMENT NEUTRONIQUE D'UN FLUX DE MATERIAUX EN VRAC.

(30) Priorité : 15.07.87 FR 8710184

(43) Date de publication de la demande :
02.08.89 Bulletin 89/31

(45) Mention de la délivrance du brevet :
16.10.91 Bulletin 91/42

(84) Etats contractants désignés :
AT BE CH DE FR GB IT LI LU NL SE

(56) Documents cités :
EP-A- 0 095 900
EP-A- 0 171 256
AT-B- 0 295 893
FR-A- 1 514 030
GB-A- 2 101 304

(73) Titulaire : ETAT FRANCAIS, représenté par le MINISTERE DE L'EQUIPEMENT, DU LOGEMENT, DE L'AMENAGEMENT DU TERRITOIRE ET DES TRANSPORTS, LABORATOIRE CENTRAL DES PONTS ET CHAUSSESS
58, boulevard Lefèbre, F-75015 Paris (FR)
Titulaire : CIMENTS LAFARGE
3-5, boulevard Louis-Loucheur
F-92210 Saint-Cloud (FR)

(72) Inventeur : ALEGRE, René
16, rue Félix-Faure
F-92500 Rueil-Malmaison (FR)
Inventeur : ALEXANDRE, Jacques, Louis, Eugène
18, rue des Tilleuls Les Sorinières
F-44400 Rezé (FR)
Inventeur : BARNAVON, Thierry, Maxime, Maurice
4, square F.-Pelloutier
F-44340 Bouguenais (FR)
Inventeur : BARON, Jean-Pierre, Noel
16, rue du Manoir
F-44620 La Montagne (FR)
Inventeur : CARIOU, Jacques
465, rue de Paris
F-75300 Sotteville-les-Rouen (FR)
Inventeur : DEBRAY, Léon
35, les Charmilles
F-78590 Noisy-le-Roi (FR)

(74) Mandataire : Nithardt, Roland et al
Cabinet Roland Nithardt Conseils en Propriété Industrielle S.A. Y-Parc Scientifique et Technologique Chemin de la Sallaz Case postale 3347
CH-1400 Yverdon-les-Bains (CH)

EP 0 325 645 B1

## Description

La présente invention concerne un procédé d'analyse par bombardement neutronique pour mesurer la quantité d'un ou plusieurs éléments recherchés dans un flux de matériaux en vrac, dans lequel on fait passer le flux de matériaux à proximité d'au moins une source de neutrons susceptibles de provoquer l'émission de rayonnements gamma par lesdits éléments, on détecte et on mesure, de manière sélective dans leur spectre d'énergie, les rayonnements gamma spécifiques émis par lesdits éléments, pour obtenir par analyse spectrale leurs quantités respectives dans le flux de matériaux. L'invention concerne également une installation pour la mise en oeuvre de ce procédé.

Un procédé de ce genre est connu notamment dans l'industrie minière, pour déterminer la teneur en métaux des minerais ou la teneur en stériles du charbon, et dans la cimenterie pour déterminer la teneur des matières premières (appelées le cru) en différents éléments qui doivent être dosés pour la fabrication du ciment. En particulier, on peut citer les publications EP-A-0171256, US-A-4362939 et WO-84/04393. Le procédé est basé sur le fait qu'un bombardement des matériaux par des neutrons provoque des réactions nucléaires avec différents éléments, accompagnées d'émission de rayonnements gamma présentant différents niveaux d'énergie en fonction de leur origine, ce qui permet une analyse par spectrométrie. Ces rayonnements comprennent d'une part des rayonnements dits de capture, qui sont émis seulement au cours des réactions de capture des neutrons par des atomes formant de nouveaux isotopes, et des rayonnements dits d'activation, qui sont émis à partir de ce moment là par les isotopes radioactifs ainsi formés et avec une intensité décroissante pendant la durée de vie de ces radio-isotopes.

Dans des conditions de laboratoire, diverses sources de neutrons peuvent être utilisées pour bombarder des échantillons relativement petits, placés dans des enceintes appropriées. Mais pour analyser de manière continue ou intermittente de grosses quantités de matériaux en vrac, la taille et la maniabilité de la source de neutrons limitent les possibilités. Pour ces applications à l'échelle industrielle, le procédé classique consiste à utiliser une source à radionucléides pour bombarder les matériaux défilant devant la source. Par exemple, le document EP-A-0171256 décrit une installation d'analyse par bombardement neutronique selon ce procédé, comportant une cheminée verticale rectangulaire dans laquelle les matériaux en vrac sont déversés en continu et s'écoulent de haut en bas à une vitesse régulière, une ou plusieurs sources radioactives de neutrons disposées d'un côté de la cheminée, et un ou plusieurs détecteurs respectifs disposés en face des sources, de l'autre côté de la cheminée de manière à obtenir des résultats aussi uniformes que possible pour l'ensemble de la section du flux de matériaux.

Le fait que les radionucléides sont des sources permanentes cause des difficultés dans une telle application industrielle. Le volumineux blindage nécessaire pour protéger l'environnement humain, ainsi que les risques de contamination par entraînement accidentel de la matière radioactive de la source, imposent de placer la source en dehors du flux de matériaux, l'irradiation de ceux-ci étant assurée par une fraction seulement des neutrons émis par les radionucléides, à travers une fenêtre ménagée dans le blindage. Cette disposition impose aussi d'imposantes mesures de protection du personnel aux environs de l'installation. En outre, elle limite la section de la cheminée, donc le volume des matériaux exposés à la source à un instant donné, ce qui exige de procéder à un échantillonnage pour le contrôle des gros flux de matériaux, tels qu'on les rencontre par exemple dans l'exploitation ou la pré-homogénéisation du charbon, du minerai de fer ou du cru à ciment. Par ailleurs, les détecteurs de rayonnements gamma sont exposés au bombardement des neutrons, susceptible de les détériorer ou de les perturber, et à des rayonnements gamma parasites provenant des deux parois de la cheminée, qui sont aussi le siège de réactions nucléaires. En outre, peur tenir compte de la densité des matériaux dans la zone située entre la source de neutrons et le détecteur opposé, le document EP-A-0171256 montre qu'il faut utiliser des moyens supplémentaires à cet effet, par exemple deux sources de rayons gamma situées de part et d'autre de la source de neutrons, et deux détecteurs supplémentaires situés en face de ces sources de rayons gamma. Ceci augmente la complexité de l'installation et les problèmes de radioprotection. Jusqu'ici, ces inconvénients ont empêché une large application du procédé et de ce type d'installations.

Pour limiter les problèmes de radioprotection, le document GB-A-2101304 prévoit, dans un appareil destiné à trier des morceaux de minerai d'or, une source de neutrons formée par une cible porteuse de deutérium et située entre trois cheminées verticales rotatives disposées en triangle autour d'elle pour former trois passages pour les matériaux. La cible est bombardée d'ions au moyen d'un accélérateur à haute tension situé latéralement et relié à la cible par un tube à vide. La détection des rayonnements gamma est effectuée plus loin en aval, dans une autre partie de l'appareil où les morceaux sont considérés individuellement pour être triés. On n'a ainsi qu'une mesure des rayonnements gamma d'activation. D'autre part, la disposition proposée de l'accélérateur et des cheminées rotatives présente des difficultés constructives considérables.

Un autre inconvénient essentiel de l'utilisation des sources à radionucléides est que l'on détecte près de la source en même temps les rayonnements gamma de capture et d'activation, et jamais un seul des deux types de rayonnements à la fois, si bien que l'identification de l'origine des différents rayonnements est rendue plus difficile, jusqu'à empêcher une mesure précise de la teneur en certains éléments recherchés. Le fait que certains des éléments activés ont une période très courte, de l'ordre de quelques secondes, empêche d'utiliser comme point de comparaison une mesure du rayonnement d'activation uniquement, effectuée à une certaine distance et un certain temps après le bombardement.

Par conséquent, l'objet de la présente invention consiste à utiliser, à la place d'une source de neutrons à radionucléides, une autre source présentant moins de problèmes de radioprotection et susceptible d'être utilisée pour analyser un courant de matériaux à gros débit, de préférence de manière à distinguer les rayonnements gamma de capture des rayonnements gamma d'activation. Un but additionnel est de fournir un procédé d'analyse dans lequel il n'y a pas besoin de mesurer séparément des paramètres variables des matériaux, tels que leur densité ou leur teneur en eau.

Dans ce but, le procédé d'analyse selon l'invention est caractérisé en ce que l'on utilise comme source de neutrons au moins un tube générateur de neutrons, en ce que l'on commande le tube générateur de neutrons de manière intermittente périodique pour produire des phases d'émission de neutrons sous la forme d'impulsions, en ce que l'on détecte, dans des intervalles de temps situés après lesdites impulsions, des rayonnements gamma de capture et d'activation desdits éléments pour établir un premier spectre, en ce que l'on détecte séparément, dans au moins un autre intervalle de temps, uniquement des rayonnements gamma d'activation desdits éléments pour établir un second spectre, et en ce que l'on combine des valeurs respectives de rayonnements gamma détectés dans des bandes d'énergie correspondantes du premier et du second spectre pour fournir une indication d'un spectre comprenant uniquement des rayonnements gamma de capture.

Comme il suffit d'interrompre l'alimentation du tube générateur de neutrons pour arrêter l'émission, cela permet d'éviter les risques d'irradiation du personnel en dehors des phases d'utilisation et simplifie donc considérablement les travaux d'installation et d'entretien. En outre, grâce aux dimensions réduites de la source de neutrons, et à la très faible radioactivité de ses composants, la source (de même que le détecteur gamma) peut être placée à l'intérieur du flux de matériaux, lesquels l'entourent et facilitent la radioprotection. Une telle disposition a aussi l'avantage d'être applicable non seulement avec des matériaux solides granulaires, mais aussi avec un flux se présentant sous une forme pâteuse ou liquide, par exemple une bouillie formée de matériaux solides dispersés dans de l'eau. D'autre part, par rapport aux sources a radionucléides telles que les sources au Cf-252 habituellement utilisées, un tube générateur de neutrons émet des neutrons mono-énergétiques dont le niveau d'énergie est plus haut au départ, par exemple 14 MeV contre environ 2,35 MeV pour le Cf-252. On peut donc freiner à volonté une part des neutrons pour bombarder les matériaux avec divers niveaux d'énergie et donc obtenir des réactions plus variées. A cet effet, on peut interposer une couche d'une matière riche en atomes d'hydrogène entre le tube générateur de neutrons et le flux de matériaux.

Il faut relever que la publication EP-A-0095900 décrit l'utilisation d'un tube générateur de neutrons pour effectuer un bombardement de manière pulsée, en combinaison avec des moyens de détection et de mesure des rayonnements gamma de capture et d'activation, mais dans une application et dans un but qui sont essentiellement différents de la présente invention puisqu'il s'agit alors d'obtenir seulement la durée de vie des neutrons thermiques dans des formations géologiques autour d'un trou de forage, par exemple lorsque l'on cherche du pétrole. Le procédé connu décrit dans ce document n'a pas pour objet et ne permet pas de mesurer la quantité de certains éléments dans le sol autour du forage. En fait, il prévoit, après chaque impulsion de bombardement neutronique, au moins quatre intervalles de temps consécutifs dans lesquels on mesure les rayonnements gamma, dont l'intensité globale décroissante d'un intervalle au suivant représente la diminution du nombre de capture, donc de la population des neutrons thermiques. Ces mesures sont corrigées par soustraction d'un rayonnement de fond qui est admis constant et qui est mesuré sur un intervalle plus long, dans lequel le tube générateur de neutrons n est pas actionné. Non seulement ce procédé ne fournit pas des mesures séparées des rayonnements gamma de capture et de ceux d'activation, mais surtout il ne prévoit aucune analyse spectrale de ces rayonnements. De plus il nécessite l'emploi de deux détecteurs dans la sonde introduite dans le forage.

Dans une forme préférée du procédé, on effectue des cycles d'émission et de détection qui comportent au moins une phase d'émission pulsée comprenant des intervalles périodiques d'émission de neutrons et des intervalles périodiques de détection intervenant respectivement après chaque intervalle d'émission, pour détecter les rayonnements gamma de capture et d'activation, puis une phase de non-émission comprenant au moins un intervalle prolongé de détection, pour détecter uniquement les rayonnements gamma d'activation, on mesure séparément les rayonnements gamma détectés durant les intervalles périodiques et durant l'intervalle prolongé, et l'on combine ensuite ces mesures respectives de manière à fournir une indication des rayonnements gamma de capture. Chaque cycle peut avoir par exemple une durée inférieure à 100 ms, tandis que les intervalles d'émission et les intervalles périodiques de détection ont des durées respectives inférieures à 0,2 ms. Dans chaque cycle, ledit intervalle prolongé a de préférence une durée égale à la somme de celles des intervalles périodiques de détection.

Selon un perfectionnement de ce procédé, on peut effectuer des émissions pulsées encore plus rapides, pour détecter brièvement après chaque émission les rayonnements gamma produits par les chocs inélastiques des neutrons dans les matériaux considérés, pendant que le flux des neutrons thermiques, donc aussi le nombre de captures, est encore négligeable. Ces rayonnements gamma sont différents de ceux de capture et d'activation et peuvent donc fournir des informations supplémentaires sur les éléments recherchés. Pour ce faire, lesdits cycles comprennent deux phases d'émission pulsée, les intervalles périodiques d'émission et de détection ayant une durée qui est inférieure à 0,05 ms (de préférence de l'ordre de 0,005 ms) dans la première phase et comprise entre 0,05 ms et 0,2 ms dans la seconde phase, on mesure séparément les rayonnements gamma détectés durant la première phase d'émission pulsée, et l'on combine les résultats des mesures résultant de ladite première phase aux mesures résultant de la seconde phase d'émission pulsée et de la phase de non-émission, pour obtenir une indication d'un spectre des rayonnements gamma produits par des chocs inélastiques des neutrons sur lesdits éléments.

Dans une forme particulièrement avantageuse du procédé selon l'invention, on définit différentes bandes d'énergie des rayonnements gamma, associées à des niveaux d'énergie respectifs qui sont caractéristiques des éléments recherchés, on mesure dans des canaux respectifs les rayonnements détectés dans ces bandes, on mesure en même temps, dans un canal distinct, les rayonnements gamma détectés dans une bande de référence englobant toutes les énergies supérieures à un seuil déterminé, plusieurs des autres bandes étant englobées dans cette bande de référence, et l'on établit une indication de la teneur d'un élément dans les matériaux en vrac par une combinaison linéaire des mesures obtenues respectivement dans la bande de référence et dans les autres bandes. De préférence, l'une des bandes d'énergie est la bande de 2220 keV, et ledit seuil est supérieur à 2400 keV.

Avec le procédé selon l'invention, le flux de matériau peut être continu dans une zone où sont effectués le bombardement neutronique et la détection des rayonnements gamma.

Le flux analysé peut notamment être un flux de matériaux solides granulaires, ou un flux de matériaux solides dispersés dans un liquide, notamment sous la forme d'une pâte ou d'une bouillie.

Dans une application préférée du procédé, les matériaux analysés comprennent des matières premières pour la fabrication du ciment. Les éléments recherchés dans ces matériaux au moyen du procédé selon l'invention peuvent comprendre au moins l'un des éléments suivants : carbone, sodium, magnésium, aluminium, silicium, soufre, calcium, fer. Cependant, le procédé est également utilisable dans d'autres applications pour mesurer la quantité de bien d'autres éléments, par exemple de l'azote, du phosphore ou du potassium dans l'industrie des engrais ou du fluor dans l'industrie de l'aluminium.

Pour la mise en oeuvre du procédé défini plus haut, l'invention s'applique à une installation d'analyse par bombardement neutronique d'un flux de matériaux en vrac, comprenant un passage pour les matériaux, au moins une source de neutrons placée à proximité de ce passage, au moins un détecteur de rayonnement gamma placé également à proximité de ce passage, et des moyens de mesure pour mesurer de manière sélective des rayonnements gamma spécifiques émis par les éléments de ces matériaux. L'installation selon l'invention est caractérisée en ce que la source de neutrons est constituée par un tube générateur de neutrons, en ce que l'installation comporte des moyens de commande pour commander de manière cyclique d'une part l'émission des neutrons par le tube générateur, et d'autre part les moyens de mesure des rayonnements gamma, et en ce que les moyens de mesure comportent au moins une voie de mesure de rayonnements gamma de capture et d'activation, une autre voie de mesure de rayonnements gamma d'activation uniquement, et des moyens de calcul pour combiner entre elles les mesures respectives obtenues par les différentes voies de mesure.

Une forme particulièrement avantageuse d'une installation selon l'invention comporte un seul détecteur de rayonnement gamma, ayant une sortie raccordée à des moyens de commutation actionnés par les moyens de commande pour délivrer les signaux de sortie du détecteur sélectivement à une voie de mesure, à une autre voie de mesure ou à aucune d'entre elles, d'une manière séquentielle en fonction d'un cycle d'émission pulsée des neutrons.

Dans les cas où ledit passage des matériaux est défini par une cheminée verticale, une sonde comportant le tube générateur de neutrons et au moins un détecteur de rayonnement gamma peut être placée dans un tube protecteur disposé à l'intérieur de cette cheminée, de sorte qu'elle se trouve avantageusement au coeur du flux des matériaux. De cette manière, les neutrons émis dans toutes les directions par la source rencontrent pratiquement tout le flux des matériaux, sauf ceux qui seront absorbés par un blindage prévu dans la sonde entre la source et le détecteur. De même, le détecteur reçoit des rayonnements gamma provenant de pratiquement toutes les directions, si bien qu'il peut détecter correctement les rayonnements gamma sans être "aveuglé" par les neutrons très énergétiques provenant directement de la source. De préférence, le tube générateur de neutrons est disposé au centre du passage des matériaux.

Dans une forme de réalisation avantageuse, le tube protecteur entourant la sonde comporte une couche d'une matière riche en atomes d'hydrogène. Comme ces atomes ont un grand pouvoir ralentisseur des neutrons et une section efficace de diffusion particulièrement grande, ils réduisent (en étalant le spectre) l'énergie d'une partie des neutrons, c'est-à-dire qu'on augmente ainsi le nombre de neutrons thermiques, donc la quantité de rayonnements gamma de capture. Ladite matière riche en atomes d'hydrogène peut être une matière synthétique telle que le polyéthylène, avec laquelle on peut réaliser entièrement le tube protecteur en évitant l'emploi d'une matière métallique, céramique ou autre, susceptible d'émettre des rayonnements gamma parasites.

De même, la paroi de la cheminée peut être revêtue intérieurement d'une couche d'une matière riche en atomes d'hydrogène, par exemple aussi en polyéthylène. Grâce à son pouvoir de diffusion, cette couche renvoie vers le flux de matériaux une partie importante des neutrons qui n'ont pas été captés par ceux-ci. Ainsi, l'efficacité du bombardement est améliorée au point de vue de la capture et de l'activation dans la zone périphérique du passage des matériaux.

Pour mieux faire comprendre l'invention et ses avantages, on décrira ci-dessous à titre d'exemple une forme de réalisation, en référence aux dessins annexés, dans lesquels :

La fig. 1 est un schéma de principe montrant les parties essentielles d'une installation selon l'invention, pour l'analyse par activation neutronique de matériaux solides granulaires dans une cheminée de transfert,

la fig. 2 est un schéma plus complet de l'installation, dans le cas où la mesure s'effectue sur une dérivation du flux principal des matériaux,

la fig. 3 est une vue schématique en coupe longitudinale d'une sonde comprenant la source de neutrons,

la fig. 4 est un diagramme représentant une première forme d'un cycle d'émission de neutrons et de détection de rayonnements gamma,

la fig. 5 est un diagramme représentant une deuxième forme d'un cycle d'émission et de détection,

la fig. 6 est un diagramme représentant un spectre de rayonnements gamma de capture, et

la fig. 7 est un schéma montrant deux voies de mesure des rayonnements gamma à partir d'un seul détecteur.

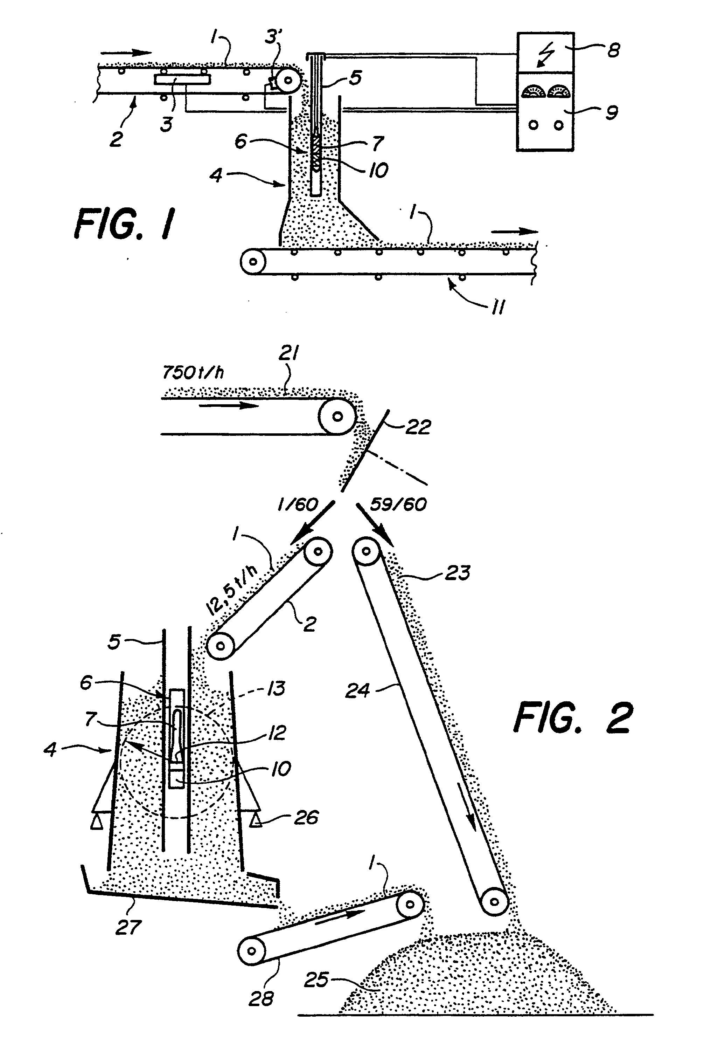

En référence à la fig. 1, un flux de matériaux 1 est constitué par un mélange sec ou à humidité naturelle de roches destinées à servir de matières premières pour la fabrication du ciment et concassées à la granulométrie habituelle. Ces matériaux sont amenés en continu par un convoyeur à bande 2 équipé d'une balance 3 pour le pesage continu, ils sont déversés dans une cheminée de transfert 4 dans laquelle ils descendent par gravité et font l'objet des mesures, et ils sont repris au bas de cette cheminée par un convoyeur à bande 11, comme l'indiquent les flèches. Cette disposition est connue et correspond sensiblement à celle du EP-A-0171256 cité plus haut.

Dans l'exemple décrit ici, la cheminée 4 contient un tube central 5 qui est disposé verticalement et qui est accessible par le haut de la cheminée. Dans la partie du tube 5 qui est entourée par les matériaux 1 remplissant la cheminée, on a placé une sonde 6 comportant un tube générateur de neutrons 7 qui est alimenté électriquement en haute tension par une unité de commande 8 associée à une unité de mesure 9, et un détecteur de rayonnement gamma 10 relié à l'unité de mesure 9. Dans le cas présent, le détecteur 10 est un détecteur à scintillations a cristal d'iodure de sodium, mais d'autres types de détecteurs sont utilisables, notamment des détecteurs à semi-conducteur tel que le germanate de bismuth ou le germanium pur.

Le tube générateur de neutrons 7 est un appareil connu, disponible dans le commerce. Il est formé par un tube scellé comprenant une source d'ions deutérium, un accélérateur à haute tension et une cible en titane chargée de tritium, sur laquelle se produit la réaction nucléaire suivante :

$$H_1^2 + H_1^3 \longrightarrow He_2^4 + n_0^1$$

Dans une installation d'essais correspondant au schéma de la fig. 2, on a utilisé un tube possédant un flux nominal d'émission de $10^8$ neutrons/s dans $4\pi$, l'énergie initiale des neutrons étant de 14 MeV. Le rayon d'efficacité des neutrons à partir de la cible 12 (fig. 2) est de l'ordre de 30 cm, ce qui correspond à une zone d'influence 13 relativement grande, donc une section assez importante du passage des matériaux 1 à travers la cheminée 4.

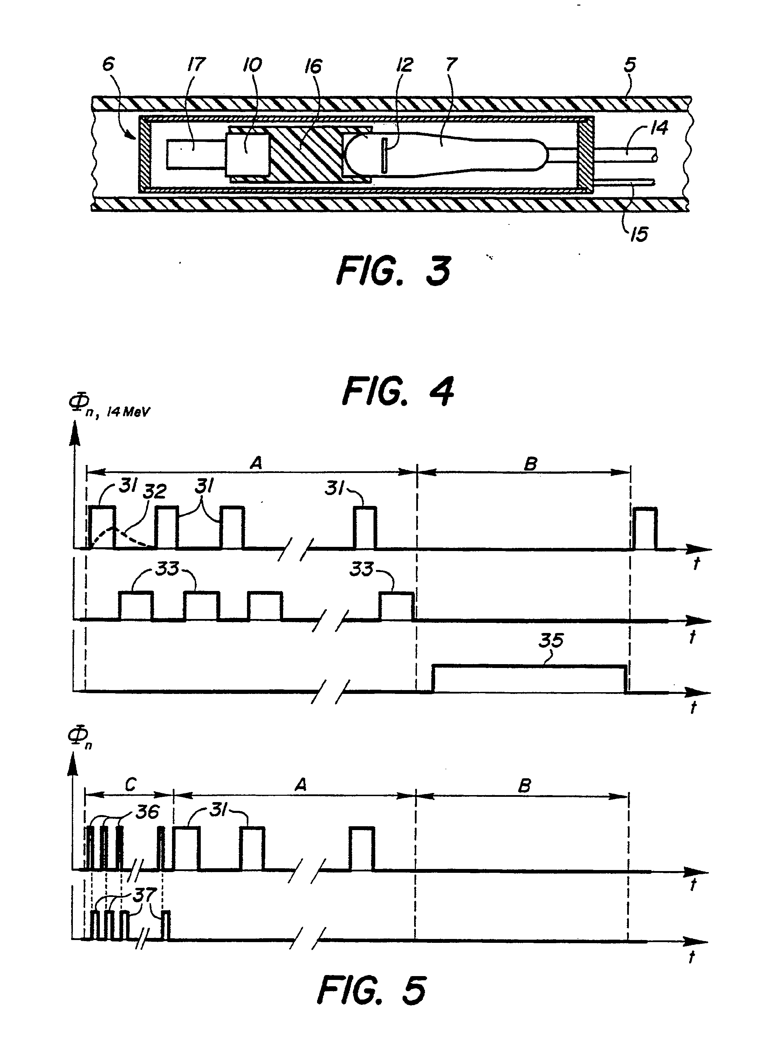

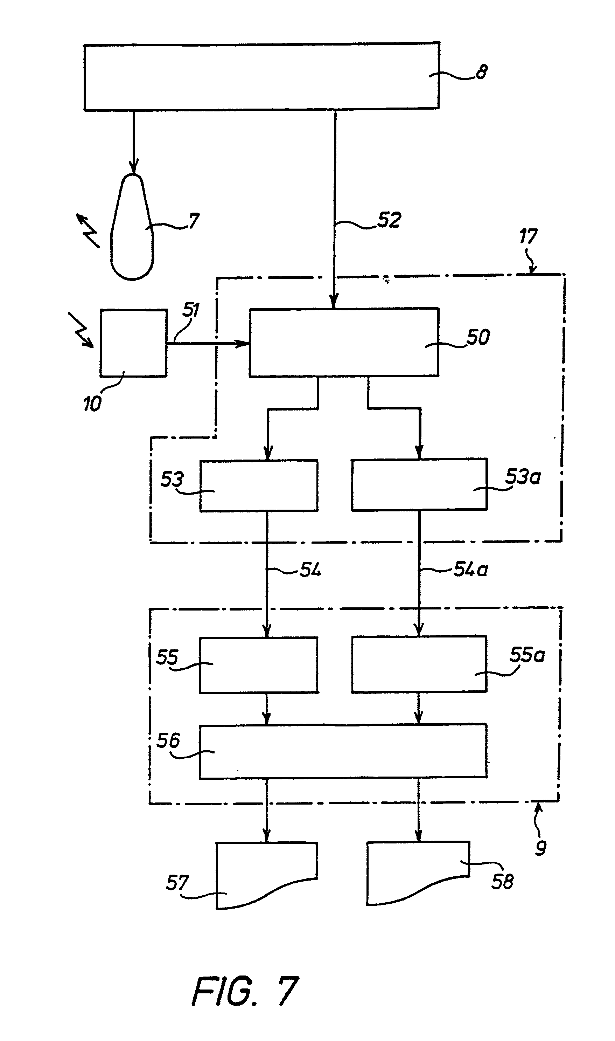

La fig. 3 illustre schématiquement la sonde 6, suspendue dans le tube protecteur 5 et raccordée à l'unité de commande 8 et à l'unité de mesure 9 par des câbles 14 et 15. Dans une gaine extérieure en aluminium ayant environ 70 mm de diamètre, la sonde 6 comprend de haut en bas le tube générateur de neutrons 7 avec sa cible 12, un blindage 16 en polyéthylène chargé de bore (ou en un autre matériau) pour absorber les neutrons, le détecteur 10 à iodure de sodium et un bloc électronique 17 qui lui est associé. Comme le montre la fig. 7, le bloc 17 comporte un organe de commutation 50 qui reçoit d'une part les signaux analogiques provenant

5

d'une sortie 51 du détecteur 10, et d'autre part, par une ligne 52 provenant de l'unité de commande 8, des signaux de commande pour adresser les signaux de sortie du détecteur à l'une, à l'autre ou à aucune de deux voies de mesure des rayonnements gamma détectés. Une première voie mesure ensemble les rayonnements de capture et d'activation. Dans le bloc électronique 17 de la sonde 6, elle comporte un système d'analyse multicanaux 53 comprenant notamment des convertisseurs analogique/numérique pour transmettre les données sous une forme numérique sur une ligne 54. Dans l'unité de mesure 9, cette première voie comporte également un système d'analyse multicanaux 55 dans lequel les signaux, classés en fonction de l'énergie des rayonnements gamma, sont comptés pendant des intervalles de temps prédéterminés. A d'autres moments du cycle de fonctionnement, correspondant à la détection de rayonnements gamma d'activation uniquement, l'organe de commutation 50 adresse les signaux de détection à la deuxième voie de mesure, qui se compose d'ensembles électroniques 53a, 54a et 55a similaires aux ensembles 53 à 55 de la première voie.

Dans l'unité de mesure 9, les signaux issus des systèmes d'analyse 55 et 55a sont traités automatiquement et en temps réel par des moyens électroniques de calcul 56, grâce à une méthode de normalisation qui sera décrite plus loin. Un élément essentiel de ce processus est que les valeurs fournies par la seconde voie de mesure 53a à 55a sont soustraites des valeurs fournies par la première voie 53 à 55, de manière à fournir des valeurs représentant uniquement les rayonnements gamma de capture. Ainsi, les moyens de calcul 56 sont capables de délivrer d'une part des résultats de mesure 57 indiquant des teneurs de certains éléments dans les matériaux analysés, mesurées uniquement sur la base des rayonnements gamma de capture, et d'autre part des résultats de mesure 58 indiquant des teneurs d'autres matériaux, mesurées uniquement sur la base des rayonnements gamma d'activation.

Les moyens électroniques 50 à 56 décrits ci-dessus sont connus dans le domaine de la spectrométrie gamma et ils n'ont pas besoin d'être décrits ici plus en détail. Bien entendu, les ensembles 53, 55 et 53a, 55a des différentes voies de mesure peuvent être partagés d'une manière différente entre le bloc 17 de la sonde et l'unité de mesure 9.

La sonde 6 est commandée par l'unité 8 de manière à effectuer des cycles d'émission et de détection dont la durée est une fraction de seconde, par exemple moins de 100 ms. Dans l'exemple de la fig. 4, le cycle a une durée de 50 ms. Il comprend successivement une phase d'émission pulsée A de 30 ms et une phase de non-émission B durant 20 ms. Le diagramme supérieur de la figure représente, en fonction du temps t, le flux $\phi_n$ de neutrons de 4 MeV émis par le tube générateur. Dans la phase A, celui-ci émet pendant 100 intervalles périodiques de 0,1 ms chacun, séparés par une pause de 0,2 ms, puis le tube est inactif pendant la phase B. La durée de 0,1 ms des intervalles 31 est suffisante pour que beaucoup de neutrons soient freinés suffisamment pour être capturés. La courbe 32 du flux des neutrons thermiques, représentée en traits interrompus et à une autre échelle dans le diagramme, tend en effet vers l'horizontale au-delà de 0,1 ms. Sa partie décroissante pendant 0,2 ms entre les intervalles 31 correspond à la principale phase de capture des neutrons. Cette durée pourrait évidemment être réduite pour des mesures dans un milieu très humide, où la durée de vie des neutrons thermiques est plus courte.

Le diagramme central illustre, sous la forme d'impulsions, des intervalles périodiques de détection 33 pendant lesquels l'organe de commutation 50 (fig. 7) met en fonction la première voie de mesure 53 à 55 des rayonnements gamma, pour exploiter les indications du détecteur quand le tube générateur de neutrons est arrêté. Chaque intervalle 33 suit un intervalle 31, mais avec un retard d'environ 0,05 ms pour éviter la détection de rayonnements gamma résultant des chocs inélastiques, et il a ici une durée de 0,14 ms durant laquelle on détecte essentiellement des rayonnements de capture au début de la phase A puis de capture et d'activation. Dans la phase B, cette première voie de mesure n'est pas activée et l'organe de commutation 50 met alors en fonction la seconde voie de mesure 53a à 55a selon le diagramme inférieur de la figure, pendant un intervalle prolongé 35 dont la durée est de 14 ms, c'est-à-dire égale au total des durées des intervalles périodiques 33, ce qui facilite la comparaison des mesures fournies par les deux voies.

Grâce à ce mode de détection, on peut retirer des mesures de la première voie l'effet des rayonnements gamma d'activation et obtenir directement un spectre des rayonnements gamma de capture.

Les deux diagrammes de la fig. 5 correspondent aux deux diagrammes supérieurs de la fig. 4 et illustrent une possibilité d'utiliser une troisième voie de mesure, pour les rayonnements gamma par chocs inélastiques. Cette voie peut être agencée de la même manière que les deux autres voies illustrées en fig. 7. Dans ce cas, on effectue avant la phase A une première phase d'émission pulsée C comprenant une rafale d'émissions de neutrons par le tube générateur durant des intervalles 36 qui sont suffisamment courts pour que les rayonnements gamma par chocs inélastiques soient prédominants par rapport à ceux de capture. Il faut notamment que ces intervalles soient inférieurs à 50 µs ; s'ils sont inférieurs à 5 µs, le nombre de captures est négligeable. Le diagramme inférieur illustre des intervalles de détection 37 qui couvrent le temps libre entre les intervalles 36. Les rayonnements détectés pendant ces intervalles sont traités dans une troisième voie de mesure. Ce procédé nécessite évidemment une électronique extrêmement rapide dans les moyens de commande et de mesure, de sorte qu'il ne se justifie que si les rayonnements de capture et d'activation ne fournissent pas des informations suffisantes. Grâce à l'analyse spectrale des rayonnements gamma dits "inélastiques", on dispose de possibilités nouvelles pour mesurer de manière industrielle la teneur en éléments relativement légers dans certains matériaux, par exemple la teneur en carbone du cru à ciment ou la teneur en fluor de matériaux intervenant dans la fabrication de l'aluminium.

Dans le cas de la fig. 2, le flux de matériaux 1 soumis à la mesure est constitué par un échantillon de 1/60 prélevé sur un flux principal 21 de 750 t/h de cru à ciment à granulométrie 0-40 mm, grâce à un préleveur à disque 22. Tandis que le flux 1 est amené à la cheminée 4 par le convoyeur 2, le reste 23 du flux 21 est transporté directement par un convoyeur 24 à un tas de préhomogénéisation 25, d'où les matériaux seront repris en vue de la fabrication du ciment.

La trémie 4 est équipée d'un dispositif de pesage 26 qui permet de contrôler le niveau de remplissage en régime intermittent ou de réguler le débit en régime continu. Le pesage permet également de disposer d'une information utile pour l'interprétation des mesures. Un extracteur vibrant 27 est disposé sous la cheminée 4 pour permettre de soutirer les matériaux à la vitesse voulue, les matériaux extraits étant évacués par un convoyeur 28 vers le tas 25. La vitesse de soutirage peut être ajustée en fonction du débit.

Deux modes de fonctionnement sont possibles. En mode intermittent, l'alimentation de la cheminée est arrêtée lorsque celle-ci est pleine. On procède alors au bombardement et aux mesures sur une durée comprise entre quelques dizaines de secondes et quelques minutes, puis on vide la cheminée. Un nouveau remplissage peut alors être opéré.

En mode continu, l'alimentation et la vidange de la cheminée 4 sont permanents et sont réglés de façon à assurer un niveau constant des matériaux 1 dans la cheminée. Les résultats des mesures sont interprétés en fonction d'un temps de bombardement moyen, le débit massique des matériaux étant alors déterminé par pesage à l'aide d'une balance 3 et d'un organe 3' de mesure de la vitesse du convoyeur 2 comme le montre la fig. 1.

Une telle installation pourrait aussi être agencée pour analyser en continu un flux de matériaux qui est très important, par exemple le flux principal 21 selon la fig. 2, sans augmentation excessive de la vitesse de défilement des matériaux devant la sonde 6. On utilise alors une cheminée ayant une section horizontale beaucoup plus grande que la cheminée 4 et dans laquelle on déverse la totalité du flux 21, en supprimant le préleveur 22. Une première variante consiste à disposer dans cette cheminée plusieurs tubes protecteurs 5 avec plusieurs sondes respectives 6 suivant une géométrie optimale, toujours à l'intérieur du flux des matériaux. Les comptages des photons gamma dans les différentes sondes 6 peuvent être simplement additionnés dans l'unité de mesure 9.

Une seconde variante consiste à utiliser une seule sonde 6, par exemple au centre de cette cheminée large, notamment plus large que la zone d'influence pratique 13 de la sonde. On considère alors que les matériaux traversant cette zone 13 forment un échantillon représentatif de l'ensemble du flux. Ainsi, la sonde se trouve au coeur même d'une grosse masse de matériaux, dans laquelle une ségrégation par effet de paroi n'est pas à craindre. Une telle disposition présente également des avantages pour la détection du fer, puisque le tube protecteur 5 et la sonde 6 peuvent être exempts de ce métal, tandis que les parois de la cheminée, situées hors de portée de la sonde, peuvent tout de même être en acier.

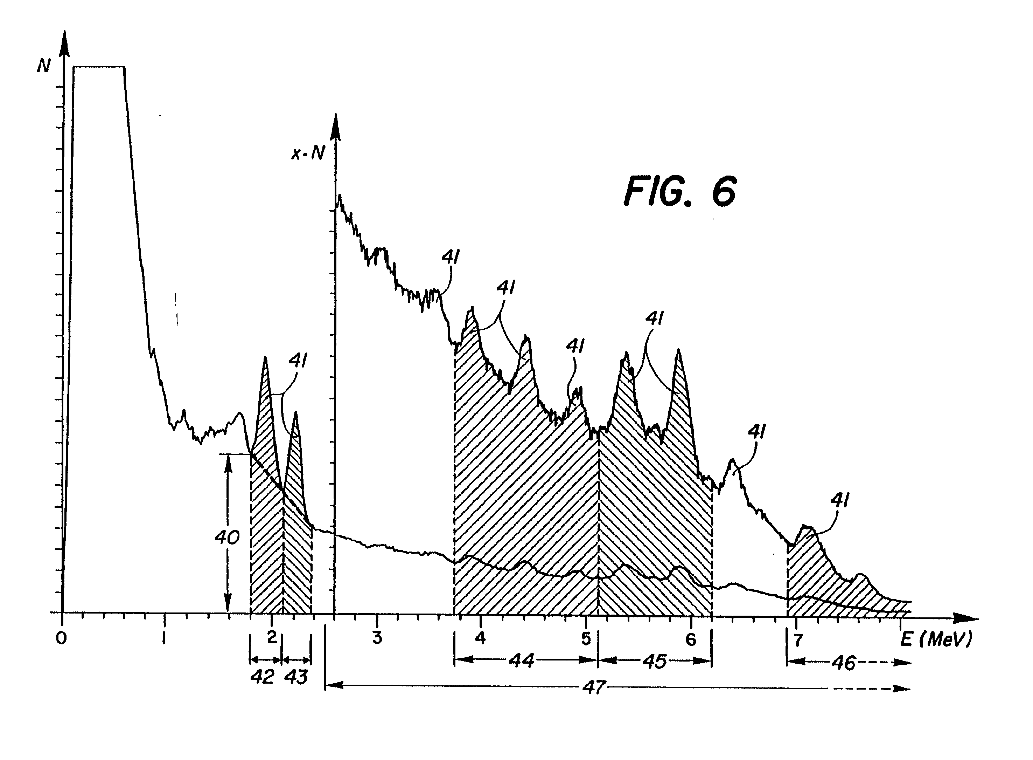

La fig. 6 illustre un exemple de spectre de rayonnements gamma de capture et la méthode d'exploitation de ce spectre pour l'analyse du cru à ciment, dans lequel on recherche par exemple la concentration en calcium, en silicium et en fer. Quant à la teneur en aluminium, également importante pour la fabrication du ciment, elle sera recherchée dans un autre spectre représentant les rayonnements gamma d'activation. Le diagramme de la fig. 6 représente le nombre N de photons gamma de capture détectés en fonction de leur énergie $E = H \cdot$ pendant une durée donnée. Pour faciliter la lecture, on a représenté une seconde fois la partie de droite du spectre, agrandie d'un facteur x.

Parmi les nombreux paramètres qui affectent l'information recueillie sous forme de spectre, quatre sont essentiels :

$C_i$      : concentration de l'élément i (fraction pondérale) directement proportionnelle au nombre de réactions de capture produites.

w      : teneur en eau du milieu.

$\phi_{th}$      : flux de neutrons thermiques dans le milieu irradié.

$\rho$      : masse volumique du milieu irradié.

La forme d'un spectre dépend donc de ces paramètres, ainsi que des modes d'irradiation et de détection utilisés, ce qui conduit à la superposition de deux motifs :

— un "fond Compton" 40 correspondant à l'accumulation de photons gamma ayant perdu de l'énergie par diffusion Compton dans le flux de matériaux ou dans le détecteur ;
— des "pics photoélectriques" 41 observables lorsque le photon incident perd toute son énergie dans le détecteur.

L'irradiation pulsée par tube générateur de neutrons et la détection par cristal Nal ne permettent pas de séparer directement les pics 41 du fond Compton 40. En effet, le détecteur au Nal, s'il est approximativement dix fois plus efficace qu'un détecteur à semi-conducteur, est toutefois moins sélectif et fournit des "pics" qui sont trop étalés. On doit alors s'intéresser à des zones étendues du spectre, qui permettent d'une part de caractériser la concentration d'un élément à doser (Ca, Si, Fe dans le cas présent), et d'autre part de prendre en compte les paramètres d'influence mentionnés ci-dessus. Pour cela, on définit, sur des zones intéressantes du spectre, des bandes d'énergie relativement larges 42 à 46 englobant chacune au moins un pic caractéristique d'un élément recherché, ainsi qu'une bande de référence 47 qui correspond au comptage intégral $N_{int}$ du spectre sur toutes les énergies supérieures à 2,5 MeV. Dans le présent exemple, les bandes 42 à 47 correspondent aux caractéristiques suivantes :

| Bande | Elément associé (keV) | Identification | Bande d'énergie (keV) |
|---|---|---|---|
| 42 | Ca : 1943 | $N_{Ca1}$ | 1810 - 2090 |
| 43 | H : 2220 | $N_H$ | 2100 - 2380 |
| 44 | Si : 4930 | $N_{Si}$ | 3750 - 5130 |
| 45 | Ca : 6420 | $N_{Ca2}$ | 5140 - 6200 |
| 46 | Fe : 7640 | $N_{Fe}$ | 6880 - 10000 |
| 47 | Intégrale | $N_{int}$ | 2500 - 10000 |

Il faut noter que le fer est le seul élément recherché figurant dans la bande 46, et que pour les autres bandes tous les éléments présents interviennent par l'intermédiaire du fond Compton. On en déduit un système d'équations qui pourra se résoudre, dans lequel $f_1$ à $f_3$ représentent des fonctions :

$$(I) \quad \begin{aligned} N_{Ca} &= f_1 \left( C_{Ca}, \ C_{Si}, \ C_{Fe}, \ \phi_{th}, \ w, \ \rho \right) \\ N_{Si} &= f_2 \left( C_{Si}, \ C_{Ca}, \ C_{Fe}, \ \phi_{th}, \ w, \ \rho \right) \\ N_{Fe} &= f_3 \left( C_{Fe}, \ \phi_{th}, \ w, \ \rho \right) \end{aligned}$$

La bande de référence 47 permet de prendre en compte les effets des trois paramètres $\phi_{th}$ (flux de neutrons thermiques), w (teneur en eau), $\rho$ (densité du matériau). En effet, ce comptage $N_{int}$ augmente dès que ces trois paramètres augmentent indépendamment les uns des autres ou simultanément. Dans le cas du fer, il faudra néanmoins prendre en compte la bande 43 associée à l'hydrogène et représentant les variations de la teneur en eau w, car la contribution des parois de la cheminée est d'autant plus grande que w est faible. On calcule ensuite les concentrations $C_i$ des éléments cherchés en inversant les relations du système (I) pour obtenir le système :

$$(II) \quad \begin{aligned} C_{Ca} &= g_1 \left( N_{Ca}, \ S_{Si}, \ N_{Fe}, \ N_{int} \right) \\ C_{Si} &= g_2 \left( N_{Si}, \ N_{Ca}, \ N_{Fe}, \ N_{int} \right) \\ C_{Fe} &= g_3 \left( N_{Fe}, \ N_{int}, \ N_H \right) \end{aligned}$$

dans lequel $g_1$ à $g_3$ représentent des fonctions.

L'exploitation est finalement possible avec une combinaison linéaire des mesures respectives N obtenues pour les différents éléments, le terme constant représentant la contribution de l'environnement du matériau analysé. Le système (II) prend alors la forme suivante :

$$C_{Ca} = (p_1 N_{Ca1} + p_2 N_{Ca2} + p_3 N_{Si} + p_4 N_{Fe}) / N_{int} + p_5$$

$$(III) \quad C_{Si} = (p_1 N_{Si} + p_2 N_{Ca2} + p_3 N_{Fe}) / N_{int} + p_4$$

$$C_{Fe} = p_1 \cdot N_{Fe}/N_{int} + p_2 \cdot 1/(N_H/N_{int})$$

L'étalonnage consiste à déterminer les coefficients $p_1$ à $p_5$ par régression linéaire multiple pour des conditions expérimentales précises, le dosage de tout élément dans ces conditions étant possible ensuite.

Dans l'installation décrite plus haut, une telle méthode d'exploitation des spectres, appelée aussi méthode de normalisation, peut être mise en oeuvre automatiquement par les moyens de calcul 56 intégrés à l'unité de mesure 9, une fois qu'on a déterminé les coefficients p. On remarque que, grâce à l'utilisation des bandes 42 à 47 relativement larges et peu nombreuses, le nombre de canaux de mesure dans chaque voie est très réduit.

Bien que l'exemple de la fig. 6 se réfère aux rayonnements gamma de capture, une méthode de normalisation semblable s'applique aux spectres de photons gamma d'activation, en particulier pour permettre le dosage de l'aluminium dans le cas du cru à ciment. Dans d'autres applications comme l'analyse du charbon ou des minerais métalliques, on définira évidemment les bandes d'énergie d'une manière différente, en fonction des éléments cherchés. Dans tous les cas, un aspect particulièrement intéressant de cette méthode est le fait qu'elle élimine pratiquement l'influence de la teneur en eau des matériaux, qui peut varier beaucoup pendant leur extraction et leur traitement, ainsi que les influences respectives de la densité, des éléments non recherchés et des variations de flux de la source de neutrons.

On constate donc que l'utilisation d'un bombardement neutronique par un tube générateur de neutrons produisant des émissions pulsées, par rapport à l'utilisation d'une source permanente à radionucléides, offre non seulement une grande sécurité, un bombardement sur une gamme d'énergie plus grande, et des renseignements plus complets sur les éléments recherchés grâce à la distinction entre les rayonnements de capture et d'activation, mais en plus on peut éliminer facilement les effets perturbateurs causés, dans l'art antérieur, par les neutrons atteignant le détecteur, par le rayonnement gamma des parois métalliques exposées aux neutrons, et par les variations de la densité et de l'humidité des matériaux. De plus, l'analyse spectrométrique en temps réel des rayonnements gamma résultant des chocs élastiques, dans un gros flux de matériaux au niveau industriel, ouvre des perspectives très prometteuses, par exemple pour le dosage automatique des carbonates dans la fabrication du ciment.

## Revendications

1. Procédé d'analyse par bombardement neutronique pour mesurer la quantité d'un ou plusieurs éléments recherchés dans un flux de matériaux en vrac, dans lequel on fait passer le flux de matériaux (1) à proximité d'au moins une source de neutrons susceptibles de provoquer l'émission de rayonnements gamma par lesdits éléments, on détecte et on mesure, de manière sélective dans leur spectre d'énergie, les rayonnements gamma spécifiques émis par lesdits éléments, pour obtenir par analyse spectrale leurs quantités respectives dans le flux de matériaux, caractérisé en ce que l'on utilise comme source de neutrons au moins un tube générateur de neutrons (7), en ce que l'on commande le tube générateur de neutrons de manière intermittente périodique pour produire des phases d'émission de neutrons sous la forme d'impulsions, en ce que l'on détecte, dans des intervalles de temps situés après lesdites impulsions, des rayonnements gamma de capture et d'activation desdits éléments pour établir un premier spectre, en ce que l'on détecte séparément, dans au moins un autre intervalle de temps, uniquement des rayonnements gamma d'activation desdits éléments pour établir un second spectre, et en ce que l'on combine des valeurs respectives de rayonnements gamma détectés dans des bandes d'énergie correspondantes du premier et du second spectre pour fournir une indication d'un spectre comprenant uniquement des rayonnements gamma de capture.

2. Procédé selon la revendication 1, caractérisé en ce que l'on dispose le tube générateur de neutrons (7) et au moins un détecteur de rayonnement gamma (10) au coeur du flux de matériaux.

3. Procédé selon la revendication 1, caractérisé en ce que l'on interpose une couche d'une matière riche en atomes d'hydrogène entre le tube générateur de neutrons et le flux de matériaux.

4. Procédé selon la revendication 1, caractérisé en ce que l'on effectue des cycles d'émission et de détection qui comportent au moins une phase d'émission pulsée (A, C) comprenant des intervalles périodiques d'émission de neutrons (31) et des intervalles périodiques de détection de rayonnements gamma (33, 37) intervenant respectivement après chaque intervalle d'émission, pour détecter les rayonnements gamma de capture et d'activation, puis au moins une phase de non-émission (B) comprenant au moins un intervalle prolongé de détection (35), pour détecter uniquement les rayonnements gamma d'activation, en ce que l'on mesure séparément les rayonnements gamma détectés durant les intervalles périodiques et durant l'intervalle prolongé, et en ce que l'on combine ensuite ces mesures respectives de manière à fournir une indication du spectre des rayonnements gamma de capture.

5. Procédé selon la revendication 4, caractérisé en ce que chaque cycle a une durée inférieure à 100 ms, les intervalles d'émission et les intervalles périodiques de détection ayant des durées respectives inférieures à 0,2 ms.

6. Procédé selon l'une des revendications 4 ou 5, caractérisé en ce que, dans chaque cycle, ledit intervalle prolongé (35) a une durée égale à la somme des durées des intervalles périodiques de détection (31).

7. Procédé selon la revendication 5, caractérisé en ce que lesdits cycles comprennent deux phases d'émission pulsée, en ce que les intervalles périodiques d'émission et de détection ont une durée inférieure à 0,05 ms dans la première phase (C) et comprise entre 0,05 ms et 0,2 ms dans la seconde phase (A), en ce que l'on mesure séparément les rayonnements gamma détectés durant la première phase d'émission pulsée (C), et en ce que l'on combine les résultats des mesures résultant de ladite première phase aux mesures résultant de la seconde phase d'émission pulsée (A) et de la phase de non-émission (B), pour obtenir une indication d'un spectre des rayonnements gamma produits par des chocs inélastiques des neutrons sur lesdits éléments.

8. Procédé selon la revendication 1, dans lequel on définit différentes bandes d'énergie des rayonnements gamma (42 à 46), associées à des niveaux d'énergie respectifs qui sont caractéristiques des éléments recherchés, et l'on mesure dans des canaux respectifs les rayonnements détectés dans ces bandes, caractérisé en ce que l'on mesure en même temps, dans un canal distinct, les rayonnements gamma détectés dans une bande de référence (47) englobant toutes les énergies supérieures à un seuil déterminé, plusieurs (44 à 46) des autres bandes étant englobées dans cette bande de référence, et en ce que l'on établit une indication de la teneur d'un élément dans les matériaux en vrac par une combinaison linéaire des mesures obtenues respectivement dans la bande de référence et dans les autres bandes.

9. Procédé selon la revendication 8, caractérisé en ce que l'une (43) des bandes d'énergie est la bande de 2220 keV, et en ce que ledit seuil est supérieur à 2400 keV.

10. Procédé selon la revendication 1, caractérisé en ce que ledit flux de matériaux (1) est continu dans une zone où sont effectués le bombardement neutronique et la détection des rayonnements gamma.

11. Procédé selon la revendication 1, caractérisé en ce que ledit flux (1) est un flux de matériaux solides granulaires.

12. Procédé selon la revendication 1, caractérisé en ce que ledit flux est un flux de matériaux solides dispersés dans un liquide, notamment sous forme d'une pâte ou d'une bouillie.

13. Procédé selon la revendication 1, caractérisé en ce que lesdits matériaux comprennent des matières premières pour la fabrication du ciment.

14. Procédé selon la revendication 13, caractérisé en ce que le ou les éléments recherchés comprennent au moins l'un des éléments suivants : carbone, sodium, magnésium, aluminium, silicium, soufre, calcium, fer.

15. Procédé selon la revendication 1, caractérisé en ce que le ou les éléments recherchés comprennent au moins l'un des éléments suivants : azote, fluor, phosphore, potassium.

16. Installation d'analyse par bombardement neutronique d'un flux de matériaux en vrac, pour la mise en oeuvre du procédé selon la revendication 1, comprenant un passage (4) pour les matériaux, au moins une source de neutrons (7) placée à proximité de ce passage, au moins un détecteur de rayonnement gamma (10) placé également à proximité de ce passage, et des moyens de mesure (9, 17) pour mesurer de manière sélective des rayonnements gamma spécifiques émis par des éléments de ces matériaux, caractérisée en ce que la source de neutrons est constituée par un tube générateur de neutrons (7), en ce que l'installation comporte des moyens de commande (8 et 9) pour commander de manière cyclique d'une part l'émission des neutrons par le tube générateur, et d'autre part les moyens de mesure des rayonnements gamma, et en ce que les moyens de mesure comportent au moins une voie de mesure (53 à 55) de rayonnements gamma de capture et d'activation, une autre voie de mesure (53a à 55a) de rayonnements gamma d'activation uniquement, et des moyens de calcul (56) pour combiner entre elles les mesures respectives obtenues par les différentes voies de mesure.

17. Installation selon la revendication 16, caractérisée en ce qu'elle comporte un seul détecteur (10) de rayonnements gamma, ayant une sortie raccordée à des moyens de commutation (50) actionnés par les moyens de commande pour délivrer les signaux de sortie du détecteur sélectivement à une voie de mesure, à une autre voie de mesure ou à aucune d'entre elles, d'une manière séquentielle en fonction d'un cycle d'émission pulsée des neutrons.

18. Installation selon la revendication 16, dans laquelle ledit passage des matériaux est défini par une cheminée verticale, caractérisée en ce qu'une sonde (6) comportant un tube générateur de neutrons et au moins un détecteur de rayonnements gamma est placée dans un tube protecteur (5) disposé à l'intérieur de cette cheminée (4).

19. Installation selon la revendication 18, caractérisée en ce que le tube protecteur (5) comporte une couche d'une matière riche en atomes d'hydrogène.

20. Installation selon la revendication 18, caractérisée en ce que la paroi de la cheminée (4) est revêtue intérieurement d'une couche d'une matière riche en atomes d'hydrogène.

21. Installation selon la revendication 19 ou 20, caractérisée en ce que ladite matière riche en atomes d'hydrogène est du polyéthylène.

22. Installation selon la revendication 16 ou 18, caractérisée en ce que le tube générateur de neutrons (7) est placé au centre du passage des matériaux.

## Patentansprüche

1. Verfahren für eine Analyse durch Neutronenbeschuß, um die Menge eines oder mehrerer Stoffe, die in einem Fluß von Schüttgütern gesucht werden, zu messen, bei dem der Materialfluß (1) in der Nähe von mindestens einer Quelle von Neutronen vorbei läuft, die in der Lage ist, das Emittieren von Gammastrahlungen durch die besagten Stoffe zu bewirken, die spezifischen Gammastrahlungen, die von den besagten Stoffen emittiert werden, in ihrem Energiespektrum selektiv erfaßt und gemessen werden, um durch spektrale Analyse deren jeweilige Mengen in dem Materialfluß zu bekommen, **dadurch gekennzeichnet,** daß als Neutronenquelle mindestens eine Neutronengeneratorröhre (7) verwendet wird, daß die Neutronengeneratorröhre diskontinuierlich periodisch gesteuert wird, um Phasen der Emittierung von Neutronen als Impulse zu erzeugen, daß in Zwischenzeiten, die nach den besagten Impulsen liegen, Einfangsgammastrahlungen und Aktivierungsgammastrahlungen der besagten Stoffe erfaßt werden, um ein erstes Spektrum zu erstellen, daß in mindestens einer weiteren Zwischenzeit nur Aktivierungsgammastrahlungen der besagten Stoffe getrennt erfaßt werden, um ein zweites Spektrum zu erstellen, und daß jeweilige Werte der erfaßten Gammastrahlungen in entsprechenden Energiebereichen des ersten und des zweiten Spektrums kombiniert werden, um eine Anzeige eines Spektrums zu liefern, das lediglich Einfangsgammastrahlungen enthält.

2. Verfahren gemäß Anspruch 1, **dadurch gekennzeichnet,** daß die Neutronengeneratorröhre (7) und mindestens ein Detektor für Gammastrahlungen (10) in der Mitte des Materialflusses angeordnet wird.

3. Verfahren gemäß Anspruch 1, **dadurch gekennzeichnet,** daß eine Schicht eines Stoffes, der reich an Wasserstoffatomen ist, zwischen der Neutronengeneratorröhre und dem Materialfluß eingelegt wird.

4. Verfahren gemäß Anspruch 1, **dadurch gekennzeichnet,** daß Zyklen für Emittierung und Erfassung durchgeführt werden, mit mindestens einer Phase der pulsierenden Emittierung (A, C) mit periodischen Zwischenzeiten für die Neutronenemittierung (31) und mit periodischen Zwischenzeiten für die Erfassung von Gammastrahlungen (33, 37) jeweils nach jeder Emittierungszwischenzeit für die Erfassung der Einfangsgammastrahlungen und der Aktivierungsgammastrahlungen, dann mit mindestens einer Phase der Nichtemittierung (B) mit mindestens einer verlängerten Zwischenzeit für die Erfassung (35), allein für die Erfassung der Aktivierungsgammastrahlungen, daß die Gammastrahlungen getrennt gemessen werden, die während der periodischen Zwischenzeiten und während der verlängerten Zwischenzeit erfaßt werden, und daß anschließend diese jeweiligen Messungen derart kombiniert werden, um eine Anzeige des Spektrums der Einfangsgammastrahlungen zu liefern.

5. Verfahren gemäß Anspruch 4, **dadurch gekennzeichnet,** daß jeder Zyklus eine Dauer von weniger als 100 ms hat, wobei die Zwischenzeiten für die Emittierung und die periodischen Zwischenzeiten für die Erfassung eine jeweilige Dauer aufweisen, die kleiner als 0,2 ms ist.

6. Verfahren gemäß einem der Ansprüche 4 oder 5, **dadurch gekennzeichnet,** daß bei jedem Zyklus die besagte verlängerte Zwischenzeit (35) eine Dauer entsprechend der Summe der Zeitdauer der periodischen Zwischenzeiten für die Erfassung hat.

7. Verfahren gemäß Anspruch 5, **dadurch gekennzeichnet,** daß die besagten Zyklen zwei Phasen von pulsierender Emittierung enthalten, daß die periodischen Zwischenzeiten für Emittierung und Erfassung eine Dauer von weniger als 0,05 ms in der ersten Phase (C) und zwischen 0,05 ms und 0,2 ms in der zweiten Phase (A) haben, daß die Gammastrahlungen getrennt gemessen werden, die während der ersten Phase der puslierenden Emittierung (C) erfaßt werden, und daß die Ergebnisse der Messungen aus der besagten ersten Phase mit den Ergebnissen der Messungen aus der zweiten Phase der pulsierenden Emittierung (A) und aus der Phase der Nichtemittierung (B) kombiniert werden, um eine Anzeige eines Spektrums der Gammastrahlungen zu bekommen, die von nicht elastischen Stößen der Neutronen auf den besagten Stoffen erzeugt werden.

11

8. Verfahren gemäß Anspruch 1, wobei verschiedene Energiebereiche der Gammastrahlungen (42 bis 46) bestimmt werden, in Verbindung mit jeweiligen Energiepegeln, die für die gesuchten Stoffe charakteristisch sind und wobei in jeweiligen Kanälen die Strahlungen gemessen werden, die in diesen Bereichen erfaßt wurden, **dadurch gekennzeichnet**, daß gleichzeitig in einem besonderen Kanal die Gammastrahlungen gemessen werden, die in einem Bezugsbereich (47) erfaßt werden, der alle Energien über einer bestimmten Schwelle hinaus umfaßt, wobei mehrere (44 bis 46) der anderen Bereiche in diesem Bezugsbereich umfaßt werden und eine Anzeige des Gehalts eines Stoffes in den Schüttgütern durch eine lineare Kombination der Messungen erstellt wird, die jeweils in dem Bezugsbereich und in den anderen Bereichen erhalten werden.

9. Verfahren gemäß Anspruch 8, **dadurch gekennzeichnet**, daß einer (43) der Energiebereiche der Bereich von 2220 KeV ist und die besagte Schwelle höher als 2400 KeV liegt.

10. Verfahren gemäß Anspruch 1, **dadurch gekennzeichnet**, daß der Materialfluß (1) in einem Bereich kontinuierlich ist, in dem der Neutronenbeschuß und die Erfassung der Gammastrahlungen erfolgen.

11. Verfahren gemäß Anspruch 1, **dadurch gekennzeichnet**, daß der besagte Fluß (1) ein Fluß von festen, körnigen Materialien ist.

12. Verfahren gemäß Anspruch 1, **dadurch gekennzeichnet**, daß der besagte Fluß ein Fluß von festen Materialien ist, die in einer Flüssigkeit dispergiert sind, insbesondere in der Form einer Paste oder eines Breis.

13. Verfahren gemäß Anspruch 1, **dadurch gekennzeichnet**, daß die besagten Materialien Rohstoffe für die Zementherstellung enthalten.

14. Verfahren gemäß Anspruch 13, **dadurch gekennzeichnet**, daß der oder die gesuchten Stoffe mindestens einen der folgenden Stoffe enthalten : Kohlenstoff, Natrium, Magnesium, Aluminium, Silizium, Schwefel, Kalzium, Eisen.

15. Verfahren gemäß Anspruch 1, **dadurch gekennzeichnet**, daß der oder die gesuchten Stoffe mindestens einen der folgenden Stoffe enthalten : Stickstoff, Fluor, Phosphor oder Kalium.

16. Vorrichtung zum Analysieren durch Neutronenbeschuß eines Flußes von Schüttgütern für die Auswertung des Verfahren gemäß Anspruch 1, bestehend aus einem Durchlauf (4) für die Materialien, mindestens aus einer Quelle von Neutronen (7), die in der Nähe dieses Durchlaufs angeordnet ist, aus mindestens einem Detektor für Gammastrahlungen (10), der ebenfalls in der Nähe dieses Durchlaufs angeordnet ist, und aus Meßeinrichtungen (9, 17), um die spezifischen Gammastrahlungen, die von den Stoffen dieser Materialien emittiert werden, selektiv zu messen, **dadurch gekennzeichnet**, daß die Neutronenquelle aus einer Neutronengeneratorröhre (7) besteht, daß die Vorrichtung Steuereinrichtungen (8 und 9) für die zyklische Steuerung einerseits der Emittierung der Neutronen durch die Generatorröhre und andererseits der Einrichtungen für die Messung der Gammastrahlungen enthält und daß die Meßeinrichtungen mindestens einen Meßstrang (53 bis 55) für die Einfangsgammastrahlungen und die Aktivierungsgammastrahlungen, einen weiteren Meßstrang (53a bis 55a) für nur die Aktivierungsgammastrahlungen und Rechnereinrichtungen (56) für die Kombination untereinander der jeweiligen Messungen, die von den verschiedenen Meßsträngen erzielt wurden, enthalten.

17. Verfahren gemäß Anspruch 16, **dadurch gekennzeichnet**, daß sie einen einzigen Detektor (10) für Gammastrahlungen mit einem Ausgang, der an Umschalteinrichtungen (50) angeschlossen ist, die von den Steuereinrichtungen betätigt werden, um die Ausgangssignale des Detektors einem Meßstrang, einem weiteren Meßstrang oder keinem von den Meßsträngen in Abhängigkeit eines Zyklus für die pulsierende Emittierung von Neutronen sequenzartig zu liefern.

18. Vorrichtung gemäß Anspruch 16, bei der der besagte Durchlauf für die Materialien ein senkrechter Schacht ist, **dadurch gekennzeichnet**, daß eine Sonde (6) mit einer Neutronengeneratorröhre und mindestens einem Detektor für Gammastrahlungen in einem Schutzrohr (5) innerhalb dieses Schachts (4) eingebaut ist.

19. Vorrichtung gemäß Anspruch 18, **dadurch gekennzeichnet**, daß das Schutzrohr (5) eine Schicht aus einem Stoff, der reich an Wasserstoffatomen ist, aufweist.

20. Vorrichtung gemäß Anspruch 18, **dadurch gekennzeichnet**, daß die Wandung des Schachts (4) innen mit einer Schicht aus einem Stoff ausgekleidet ist, der reich an Wasserstoffatomen ist.

21. Vorrichtung gemäß Anspruch 19 oder 20, **dadurch gekennzeichnet**, daß der Stoff, der reich an Wasserstoffatomen ist, Polyäthylen ist.

22. Vorrichtung gemäß Anspruch 16 oder 18, **dadurch gekennzeichnet**, daß die Neutronengeneratorröhre (7) in der Mitte des Durchlaufs der Materialien angeordnet ist.

## Claims

1. Method for analysis by neutron activation to measure the quantity of one or more elements sought in a flow of material in bulk in which the flow of material (1) is made to pass close to at least one source of neutrons capable of inducing the emission of gamma rays from said elements, specific gamma rays emitted by the elements are detected, measured and sorted according to their energy spectra, to obtain their respective quantities in the flow of material, characterized in that for the neutron source at least one tube generating neutrons (7) is used, in that the neutron generating tube is used for intermittent periods to produce phases of emission of pulsated flows of neutrons, in that in the time intervals following these impulsions the gamma rays from capture and activation by said elements are detected to establish an initial spectrum, in that in at least one other interval of time, gamma rays, from activation only, are detected to establish a second spectrum, and in that the respective values of gamma rays detected in the energy ranges corresponding to the first and the second spectra are combined to give an indication of a spectrum containing only gamma rays from capture.

2. Method according to claim 1, characterized in that the neutron generating tube (7) and at least one gamma detector (10) can be placed within the flow of material.

3. Method according to claim 1, characterized in that a layer of a substance rich in hydrogen atoms is introduced between the generating tube and the flow of material.

4. Method according to claim 1, characterized in that cycles of emission and detection are carried out, which consist of at least one pulsed emission phase (A, C) comprising regular periods of neutron emission (31) and regular periods of detection of gamma rays (33, 37), each emission period being followed by a regular period of detection, and at least a phase of non-emission (B) comprising at least one prolonged interval of detection (35) to detect the gamma rays from activation only, in that gamma rays detected during the regular intervals and the prolonged interval are measured separately and in that these respective measures are combined in such a way as to give an indication of the gamma rays from capture.

5. Method according to claim 4, characterized in that each cycle has a length of up to 100 ms, the regular intervals of emission and detection having less than 0,2 ms in length.

6. Method according to any one of claims 4 or 5, characterized in that, for each cycle, said prolonged interval (35) preferably has a length equal to the sum of the regular detection periods (31).

7. Method according to claim 5, characterized in that said cycles consist of two pulsed emission phases, in that the regular intervals of emission and detection have a time of less than 0,05 ms in the first phase (C) and of between 0,05 and 0,2 ms in the second phase (A), in that the gamma rays detected during the first phase (C) are measured separateley and in that these results are combined with those obtained from the second phase of pulsed emission (A) and from the phase of non-emission (B) so as to give an indication of a spectrum of gamma rays resulting from the inelastic collisions between the neutrons and the elements.

8. Method according to claim 1, in which different energy ranges of gamma rays (42 to 46) may be distinguished which are associated with the respective energy levels characteristic of the elements under investigation, and the rays detected in these ranges are measured in the relevant channels, characterized in that, simultaneously in a separate channel, the gamma rays detected in a reference range (47) which encompasses all the energies superior to a defined threshold, several (44 to 46) of the other ranges being included in this reference range, are measured, and in that an indication of the content of an element in a bulk material is obtained by a linear combination of the measures obtained from the reference range and from the other ranges respectively.

9. Method according to claim 8, characterized in that one (43) of the energy ranges is of 2220 keV, and in that said threshold is superior to 2400 keV.

10. Method according to claim 1, characterized in that the material (1) flows continuously in the zone where the neutron activation and gamma ray detection are carried out.

11. Method according to claim 1, characterized in that said flow (1) is a stream of solid granular material.

12. Method according to claim 1, characterized in that said flow is a stream of solid material dispersed in a liquid, usually in the form of a paste or slurry.

13. Method according to claim 1, characterized in that said materials comprise raw feeds for the manufacture of cement.

14. Method according to claim 13, characterized in that one or all the elements detected comprise at least one of the following elements : carbon, sodium, magnesium, aluminium, silicon, sulphur, calcium, iron.

15. Method according to claim 1, characterized in that one or all the elements detected comprise at least one of the following elements : nitrogen, fluorine, phosphorus or potassium.

16. Installation for neutron activation analysis of a flow of material in bulk for using the method according to claim 1, comprising a passage (4) for the materials, at least one source of neutrons (7) placed close to the passage and at least one gamma ray detector (10) also placed close to the passage, and means of measurement (9, 17) for measuring of selective manner the characteristic gamma rays emitted by the elements contained in the material, characterized in that the neutron source is in the form of a tube generating neutrons (7), in that the installation comprises means (8, 9) for controlling in a cyclical manner the flow of neutrons emitted by the generating tube and also means of measuring the emitted gamma rays, and in that the means of measurement consist of at least one channel (53 to 55) to measure the gamma rays from activation and capture and another channel (53a to 55a) for measuring only the gamma rays from activation, and means of calculation (56) to combine the measures obtained by the various channels.

17. Installation according to claim 16, characterized in that it comprises a single gamma ray detector (10) whose exit is linked to means of switching (50) controlled to transmit signals from the detector exit selectively to one measurement channel, to another one or to none of them, in a sequential manner depending on the pulsed emission cycle of the neutrons.

18. Installation according to claim 16, in which said passage of material takes the form of a vertical funnel, characterized in that a probe (6) containing one neutron generating tube and at least one gamma ray detector is placed in a protective tube (5) inside the funnel (4).

19. Installation according to claim 18, characterized in that the protective tube (5) contains a layer of a material rich in hydrogen atoms.

20. Installation according to claim 18, characterized in that the wall of the funnel (4) is lined on the interior with a layer of hydrogen-rich material.

21. Installation according to claim 19 or 20, characterized in that said hydrogen-rich material is of polyethylene.

22. Installation according to claim 16 or 18, characterized in that the neutron generating tube (7) is arranged in the centre of passage of the materials.

**FIG. 1**

**FIG. 2**

750 t/h

1/60    59/60

12,5 t/h

FIG. 3

FIG. 4

FIG. 5

FIG. 6

*FIG. 7*